# EUROPEAN PATENT SPECIFICATION

(11) **EP 0 697 333 B1**
(45) Date of publication and mention of the grant of the patent: **01.04.1998**
(21) Application number: 95112974.1
(22) Date of filing: 17.08.1995
(51) Int. Cl.: B62M 23/02

(54) **Electrically assisted bicycle**
Fahrrad mit elektrischem Hilfsmotor
Bicyclette assistée par un moteur électrique

(30) Priority: 18.08.1994 JP 194446/94
(43) Date of publication of application: 21.02.1996
(73) Proprietor: HONDA GIKEN KOGYO KABUSHIKI KAISHA, Minato-ku, Tokyo (JP)
(72) Inventor: Ogawa, Sumitaka, Wako-shi, Saitama (JP)
(74) Representative: Liska, Horst, Dr.-Ing.

(56) References cited:
- EP-A- 0 569 954

## Description

The present invention relates to an electrically assisted bicycle which utilizes electric power output by a motor as a supplement to human power for pedaling the bicycle. In particular, the present invention relates to an electrically assisted bicycle wherein a standstill state of the electrically assisted bicycle can be recognized from a detected pedaling force without using a speed sensor or the Like and when the electrically assisted bicycle is found to be in a standstill state, a reference for determining whether or not an assist operation (an operation to drive a motor and supply supplementary electric power) is to be carried out is increased to a value greater than a reference for a running state so that an unnecessary assist operation is not carried out even if a foot is placed on a pedal thereof, applying a large pedaling force.

In an electrically assisted bicycle wherein the output of an electric-power based driving system provided along with a human-power based driving system is controlled in accordance with variations in pedaling force, a moor is driven to generate supplementary electric power whenever the pedaling force exceeds a predetermined reference.

Disclosed in Japanese Patent Laid-open No. H5-246378 is a proposed an electrically assisted bicycle comprising a pedaling-force-reference determining means for determining a reference based on a speed detected by a speed detecting means and a motor-driving-force processing means for setting a driving force to be output by an electrical driving system to a zero for a pedaling force smaller than the reference so as to provide desirable features that supplementary electric power is provided from a motor only when an actually required pedaling force is greater than a pedaling-force reference found by using a technique based on a level-land running resistance encountered in a state of running normally on a level road and that the sense of driving an ordinary bike is sustained by halting the use of the motor for providing supplementary electric power when the actually required pedaling force is smaller than the pedaling-force reference found by using the technique based on a level-land running resistance.

In the case of the electrically assisted bicycle proposed in Japanese Patent Laid-open No. H4-358987, when the electrically assisted bicycle is started by placing one foot on a pedal and kicking the ground with the other foot, the pedaling force changes irregularly and, in some cases, an extremely large pedaling force is applied. If the driving force of the electric motor is controlled on the basis of the pedaling force, the driving feeling deteriorates, making it difficult to start the electric-power supplemented bicycle smoothly. For this reason, the assist operation is disabled when starting the electrically assisted bicycle for a predetermined period of time, allowing the same driving feeling as an ordinary bike to be retained and the electrically assisted bicycle to be started smoothly.

Naturally, the effect of the assist operation can be felt better by always carrying out the assist operation each time the pedaling force applied by the driver exceeds a certain value. However, in a state with one foot placed on a pedal and the brake applied, there is the possibility of an unnecessary assist operation's being carried out inevitably due to a considerably large pedaling force applied to the pedal. As proposed in Japanese Patent Laid-open No. H4-358987, a rotation sensor is provided on either the front wheel or the rear wheel for determining a standstill state of the electrically assisted bicycle based on information on the speed detected by the rotation sensor. Accordingly, control for not starting the assist operation even in the case of a large detected pedaling force in a standstill state such as, for example, a state of waiting for a green light can be implemented relatively with ease. In order to implement such control, however, a rotation sensor for detecting a standstill state and a means for detecting a state of applying the brake are required.

The electrically assisted bicycle disclosed in EP 0 569 954 A1 comprises a system for providing an assist force which starts up when a key switch of the bicycle is switched on and the system deactivates, i.e. shuts down when a failure mode is detected. For detecting the failure mode, the system monitors the evolution of the pedaling force with respect to time. If the pedaling force increases and decreases periodically with a periodicity which is higher than a predetermined periodicity, it is concluded that the system and especially a pedaling force sensor for the system are operating well. If, on the other hand, the pedaling force keeps decreasing or remains constant for a duration longer than a predetermined time, the system concludes that a failure has occurred. In this case no assist force is to be provided and the system shuts down accordingly.

Since the system disclosed in EP 0 569 954 A1 shuts down when the pedaling force keeps decreasing for a duration longer than a predetermined time, it will also shut down when the driver is pedaling quite slowly. This will also happen when the bicycle is to go up a steep slope at low speed. The pedaling force might then change so slowly that the system concludes that a failure occurred and shuts down although the driver still needs the assist force.

It is an object of the present invention to provide an electrically assisted bicycle which provides an assist force even when a slowly varying pedaling force is detected and which is capable of correctly recognizing a stopped state of the bicycle where no assist force is to be provided.

In order to solve the above object, the present invention provides an electrically assisted bicycle according to claim 1.

The time for which a pedaling force detected by the pedaling-force detecting means has been continuously remaining at a value smaller than the operating-state criterion value is monitored and as the monitored time exceeds the judgment time, the pedaling force reference value for starting an assist operation is changed to the start-time reference value which is higher than the running-time reference value.

The pedaling force reference value for starting an assist operation is therefore set at a high value in a standstill state, the motor will never be operated and, thus, unnecessary supplementary electric power will by no means be generated even if a considerably large pedaling force is applied to a pedal in a state with typically one foot placed on the pedal and the other foot on the ground. It should be noted, after a pedaling force greater than the start-time reference value is applied, the pedaling force reference value for starting an assist operation is restored to the running-time reference value. As a result, the motor is operated for carrying out the assist operation or pedaling forces greater than the running-time reference value.

### Brief Description of the Drawings

Fig. 1 is a diagram showing a side view of an electrically assisted bicycle provided by the present invention;
Fig. 2 is a diagram showing a vertical cross section of a battery case;
Fig. 3 is a diagram showing a vertical side cross section of the rear part of the battery case and the lower part of a center case;
Fig. 4 is a model diagram showing structures of a transmission gear mechanism and a pedaling-force detecting means;
Fig. 5 is a block diagram showing the configuration of a control apparatus employed in the electrically assisted bicycle provided by the present invention;
Fig. 6 shows time charts of the operations of the control apparatus;
Fig. 7 is a diagram showing the circuit configuration of a typical control apparatus;
Fig. 8 shows time charts of the operations of the motor-driving limiting means; and
Fig. 9 shows a flowchart of the overall operation of the control apparatus.

The present invention will become apparent from the following detailed description of preferred embodiments with reference to accompanying diagrams.

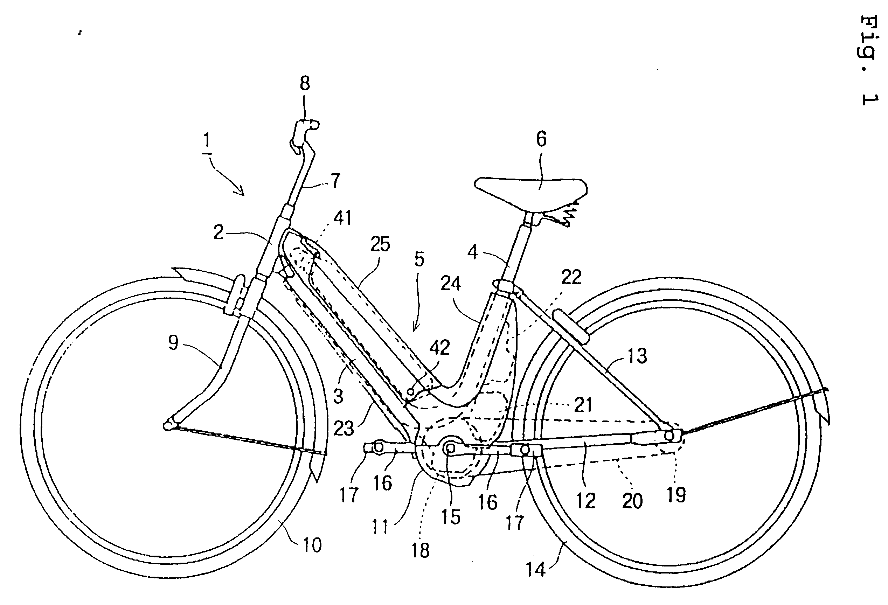

Fig. 1 is a diagram showing a side view of an electrically assisted bicycle provided by the present invention.

As shown in the figure, a down tube 3 is extended from a head pipe 2 of the electrically assisted bicycle 1 in a slanting backward-downward direction. The lower end of the down tube 3 is bent in a slanting backward-upward direction and a seat tube 4 is extended from the lower end of the down tube 3. The down tube 3 and the seat tube 4 form a main frame 5 which having a shape resembling all but the V character. A seat 6 is provided on the upper end of the seat tube 4.

A steering shaft 7 is inserted into the head pipe 2 in such a way that the steering shaft 7 can be rotated freely. A steering handle 8 is mounted on the upper end of the steering shaft 7 to form an assembly with the steering shaft 7 which assembly also includes a pair of right and left forks 9 extended from the lower end of the steering shaft 7. The axis of a front wheel 10 is attached to the lower ends of the right and left forks 9 in such a way that the front wheel 10 can rotate freely around the axis.

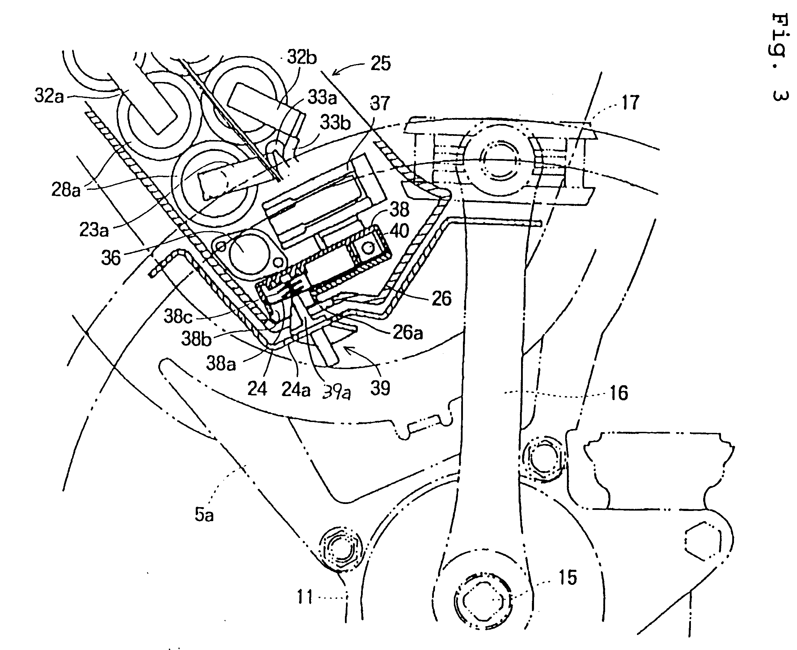

A downward protruding bracket 5a shown in Fig. 3 is provided on the lower part of the bent portion of the main frame 5, a cross-portion of the down tube 3 and the seat tube 4. A gear box 11 accommodating a transmission gear mechanism as well as serving as a crank case is mounted on the bracket 5a to form an assembly with the bracket 5a. The assembly also includes a rear fork 12 oriented in the longitudinal direction of the electrically assisted bicycle 1 with the front end of the rear fork 12 fixed to the gear box 11. A stay 13 is suspended between the rear end of the rear fork 12 and the seat tube 4. The axis of a rear wheel 14 is attached to the rear end of the rear fork 12 in such a way that the rear wheel 14 can rotate freely around the axis.

A crank shaft 15 is held by the gear box 11 in such a way that the crank shaft 15 can rotate freely. Crank arms 16 are fixed to the right and left ends of the crank shaft 15 to from a crank-shaft assembly. A pedal 17 is provided at the end of each of the crank arms 16.

An endless chain 20 is suspended on a driving sprocket 18 fixed on the crank shaft 15 as part of the crank-shaft assembly and on a driven sprocket 19 fixed on the rear wheel 14 as an assembly. When the crank shaft 15 is driven to rotate by pedaling forces applied to the pedals 17, the pedaling forces are passed on to the rear wheel 14 to also rotate the rear wheel 14 through the driving sprocket 18, the endless chain 20 and the driven sprocket 19. As a result, the electrically assisted bicycle 1 can be driven as an ordinary bike.

Furthermore, a driving motor 21 is fixed on the gear box 11 in a direction parallel to the seat tube 4. A control apparatus 22 is installed on the back-side surface of the seat tube 4 above the driving motor 21. The control apparatus 22 comprises, among other components, an electronic control unit and a motor driver for controlling the rotation of the driving motor 21. As the driving motor 21 rotates under the control of the control apparatus 22, a rotation torque output by the driving motor 21 is transmitted to the crank shaft 15 through the transmission gear mechanism, causing the electric power output by the driving motor 21 to supplement the human power.

As described earlier, the down tube 3 on the left side and the seat tube 4 on the right side, which form the main frame 5 with a shape resembling the V character, are veiled by a side cover 23 and a center cover 24 respectively. A long battery case assembly 25 is mounted on the upper surface of the inclined side cover 23 for veiling the down tube 3 in such a way that the battery case assembly 25 can be removed with ease.

A main switch 41 comprising key switches (combination switches) and the like is provided at the front end of the side cover 23. It should be noted that the battery case assembly 25 is put in such a structure that, when the main switch 41 is set to an on position, a lock apparatus interlocked with the operation of the main switch 41 makes the battery case assembly 25 unremoveable. Note that the lock apparatus itself is not shown in the figure.

In addition, a connection unit 42 comprising a charging connector and the like is provided on a side surface of the battery case assembly 25, allowing the battery to be charged even with the battery case assembly 25 mounted on the electrically assisted bicycle 1 as it is.

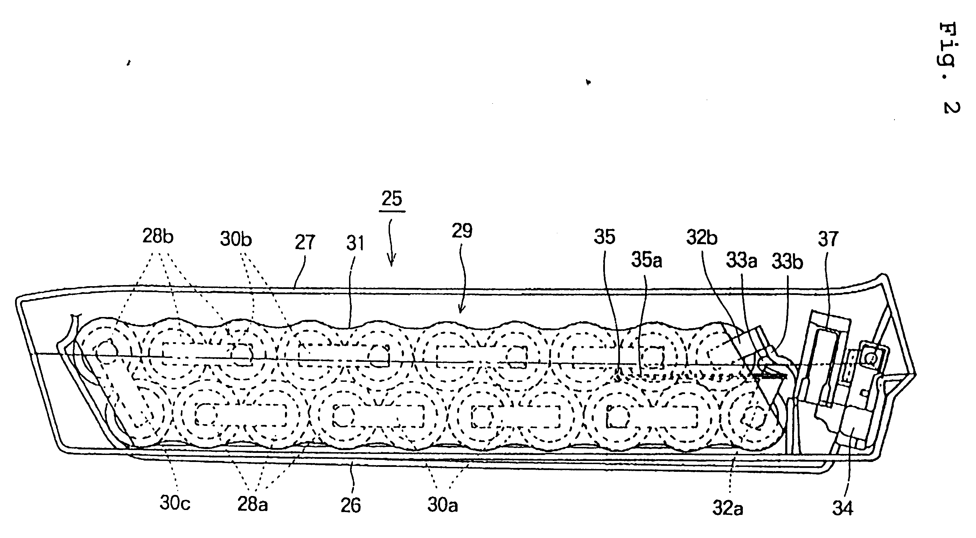

Fig. 2 is a diagram showing a vertical cross section of the battery case assembly 25.

As shown in the figure, the battery case assembly 25 is divided into a lower case 26 on the lower side and an upper case 27 on the upper side. The battery case assembly 25 contains a power-supply battery set 29 comprising a lower row of ten battery cells 28a and an upper row of ten battery cells 28b. The battery cells 28a and 28b are each a cylindrical single-type Ni-Cd (Nickel-Cadmium) battery cell. The power-supply battery set 29 can be removed from the battery case assembly 25 with ease.

In addition, the upper case 27 of the battery case assembly 25 is part of the external surface of the body of the electrically assisted bicycle 1.

The power-supply battery set 29 has the following configuration. Two adjacent Ni-Cd battery cells 28a have their positive and negative poles placed alternately. The ten Ni-Cd battery cells 28a are arranged in such a way that their outer surfaces come into contact with each other into a lower row perpendicular to the center lines of the Ni-Cd battery cells 28a. In each upper dent between two adjacent Ni-Cd battery cells 28a on the lower row, an upper Ni-Cd battery cell 28b is laid down in a way that the ten Ni-Cd battery cells 28b form an upper row above the lower row. The positive pole of a Ni-Cd battery cell 28a on the lower row is connected to the negative poles of the two Ni-Cd battery cells 28a adjacent thereto by connection plates 30a, each shown as a dashed-line square in Fig. 2, by soldering both the ends of the connection plate 30a to the positive and negative poles of two adjacent Ni-Cd battery cells 28a. Similarly, connection plates 30b are each used for connecting the positive and negative poles of two adjacent upper Ni-Cd battery cells 28b. The negative pole of an Ni-Cd battery cell 28a and the positive pole of an Ni-Cd battery cell 28b at the front ends of the lower and upper rows respectively, or the left ends shown in the figure, are connected to each other by a connection plate 30c. The lower and upper Ni-Cd battery cells 28a and 28b are inserted into a cylindrical film 31 made of thermally shrinking compound resin. The thermally shrinking compound resin cylindrical film 31 is then shrunk by heating it.

A connection plate 32a connected to the positive pole of an Ni-Cd battery cell 28a at the rear end of the lower row, or the right end shown in Fig. 2, is assembled with a lead 33a by soldering one end of the lead 33a to the connection plate 32a. Likewise, a connection plate 32b connected to the negative pole of an Ni-Cd battery cell 28b at the rear end of the upper row, or the right end shown in Fig. 2, is assembled with a lead 33b by soldering one end of the lead 33b to the connection plate 32b. The other ends of the leads 33a and 33b are connected to an electric-power supplying connector 34 through which electric-power is supplied to the control apparatus 22. For details of connections between the connection plate 32a and the lead 33a as well the connection plate 32b and the lead as 33b, refer to Fig. 3.

A thermally sensitive resistor element 35 such as a thermistor is provided between the Ni-Cd battery cells 28a an the lower row and the Ni-Cd battery cells 28b on the upper row. The thermally sensitive resistor element 35 is connected to an electric-power charging connector 36 shown in Fig. 3 through a lead 35a. When charging the Ni-Cd battery cells 28a and 28b by a charger not shown in the figure, the charger can monitor the temperature of the Ni-Cd battery cells 28a and 28b by measuring the resistance of the thermally sensitive resistor element 35.

In addition, the battery case assembly 25 also includes a variety of fuses 37 and circuit components such as diodes for preventing a charging voltage from being applied at an inverse polarity. It should be noted that the circuit components themselves are not shown in the figure.

Fig. 3 is a diagram showing a vertical side cross section of the rear part of the battery case assembly and the lower part of a center case.

An electric-power supplying connector 38 is provided at the rear end of the battery case assembly 25. The electric-power supplying connector 38 has a pair of right and left contactor terminals 38a made of a conductive and elastic material such as a copper alloy plate. Each of the contactor terminals 38a is fixed to a connector case by securing one of its end using a screw 40 and also connected electrically to the leads 33a and 33b. A connector 39, a counterpart of the electric-power supplying connector 38, is provided on a bottom wall 24a of the center cover 24. The connector 39 has a pair of protruding rod terminals 39a on the right and left sides. With the battery case assembly 25 mounted, the protruding rod terminals 39a are inserted into an opening 26a formed on a lower case 26 and an opening 38b on the electric-power supplying connector 38 respectively till the edges of the protruding rod terminals 39a come into contact with the contactor terminals 38a. With such an arrangement, electric power can be supplied from the battery cells 28a and 28b. The other ends of the contact terminals 38a are displaced by pushing up the protruding rod terminals 39a. Coil springs 38c are provided on the displaced portions against the displacement forces so that sufficient contact pressures are obtained, making interruption of the supply of electric power difficult to occur which interruption is caused by vibration or the like generated while the electric-power supplemented bicycle 1 is running.

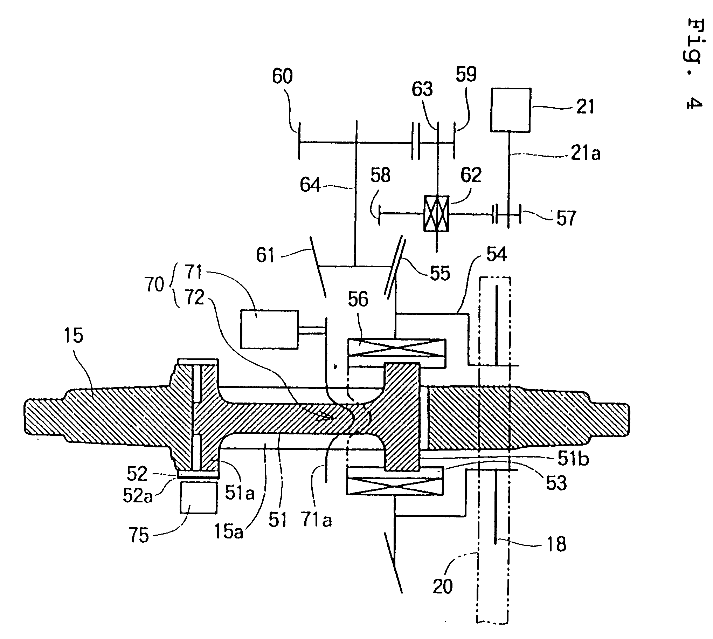

Fig. 4 is a model diagram showing structures of the transmission gear mechanism and the pedaling-force detecting means.

In the longitudinal mid of the crank shaft 15, a through hole 15a which is extended in the axial direction and penetrates in the radial direction is formed. A torsion bar 51 having the same axis as the crank shaft 15 is accommodated inside the through hole 15a. A head 51a formed at the left end (or the input end) of the torsion bar 51 is linked to the crank shaft 15 through a collar 52. A head 51b formed at the right end (or the output end) of the torsion bar 51 is, on the other hand, attached by pressure to a groove formed on the inner circumference of a driving member 53 having a shape resembling a ring. Wall surfaces of the through hole 15a of the crank shaft 15 facing each other are bent in such a way that their cross sections each form approximately a circular arc, allowing for a rotation of the torsion bar 51 by a predetermined angle-relative to the head 51b on the free end side thereof and, at the same time, preventing the torsion bar 51 from being ruptured by an excessively big load applied thereto.

A first unidirectional clutch 56 is provided between a bevel gear 55 fixed on the inside perimeter of a sleeve 54 and the ring-shaped driving member 53. When forces are applied to the pedals 17 not shown in the figure to rotate the crank shaft 15 in the forward direction, a torque output by the crank shaft 15 is transmitted to the driving sprocket 18 spline-connected to the outer circumference of the sleeve 54 through the torsion bar 51, the ring-shaped driving member 53, the bevel gear 55 and the sleeve 54. The torque is then transmitted to rear wheel 14 through the endless chain 20 and the driven sprocket 19 shown in Fig. 1. When forces are applied to the pedals 17 not shown in the figure to rotate the crank shaft 15 in the backward direction, on the other hand, the first unidirectional clutch 56 slips, allowing the crank shaft 15 to rotate in the backward direction.

When the driving motor 21 is driven to rotate, a torque produced by an output shaft 21a thereof is transmitted to the driving sprocket 18 through four super gears 57, 58, 59 and 60, the bevel gear 55 and another bevel gear 61. A second unidirectional clutch 62 is provided on a first intermediate shaft 63 for avoiding a hindrance to rotation of the driving sprocket 18 driven by human power even when the driving motor 21 is at a standstill. It should be noted that reference numeral 64 denotes a second intermediate shaft.

The pedaling-force detecting means 70 comprises a torque-into-displacement converting means 71 for converting a twist caused by a pedaling force (or a torque) into a displacement in the axial direction and a stroke sensor 72 for outputting an electrical signal representing the displacement. The torque-into-displacement converting means 71 is configured to include engagement of a protruding cam surface formed on the end surface of a slider-inner 71a rotating along with the crank shaft 15 as an assembly with a dented cam surface formed on the end surface of the driving member 53.

In order to detect the rotational speed of the crank shaft 15, a tooth unit 52a is formed on the outer circumference of the collar 52 connecting the crank shaft 15 to the head 51a of the torsion bar 51. A crank-shaft speed sensor 75 is provided at a location exposed to the tooth unit 52a. The crank-shaft speed sensor 75 is designed to output detection pulses resulting from optical or magnetic detection of the tooth unit 52a.

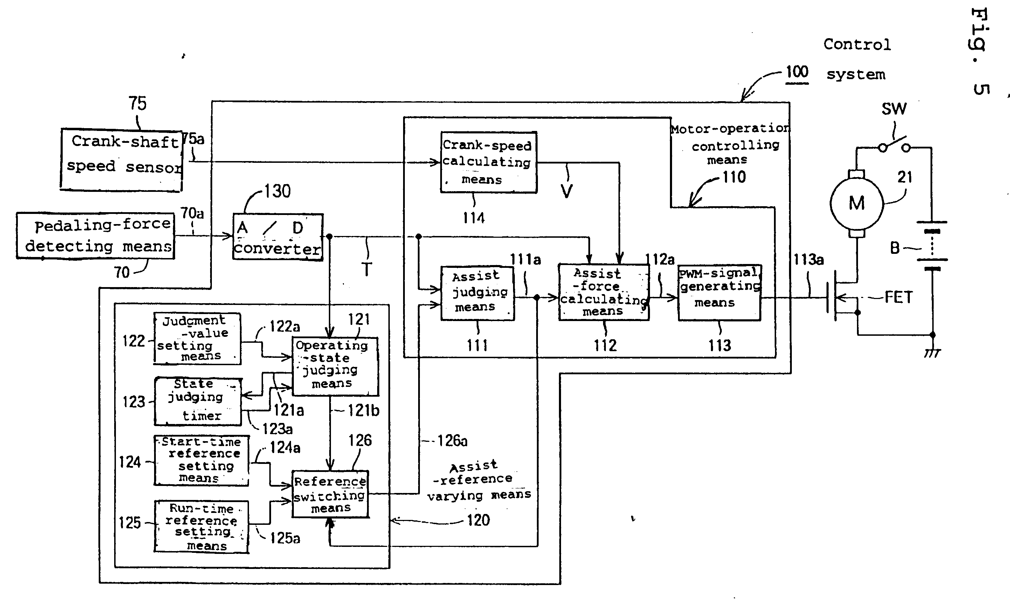

Fig. 5 is a block diagram showing the configuration of a control system 100 employed in the electrically assisted bicycle provided by the present invention.

The functions of the control system 100 are implemented by a single-chip microcomputer embedding, among other components, a CPU, a ROM/RAM unit, an A/D converter and a timer which is not shown in the figure. The control system 100 comprises a motor-operation controlling means 110, an assist-reference varying means 120 and an A/D converter 130 for converting a voltage signal 70a into a digital signal, which voltage signal 70a represents a pedaling force detected by a pedaling-force detecting means 70.

The motor-operation controlling means 110 comprises an assist judging means 111, an assist-force computing means 112, a PWM-signal generating means 113 and a crank-speed computing means 114. The assist judging means 111 outputs an assist request signal 111a when a detected pedaling-force signal T which has been converted into a digital signal and is referred to hereafter as a pedaling force exceeds an assist reference. The assist-force computing means 112 calculates an assist force 112a when the assist request signal 111a is supplied thereto. The PWM-signal generating means 113 generates and outputs a PWM signal 113a required by a driving motor 21 for supplying the assist force 112a. The crank-speed computing means 114 outputs data representing a crank speed from a pulse signal 75a representing a crank speed detected by a crank-speed sensor 75. The data is referred to hereafter merely as a crank rotational speed V.

The assist-reference varying means 120 comprises an operating-state judging unit composed of an operating-state judging means 121, a criterion setting means 122 and a state judging timer 123, and a reference switching means 126 for selecting an assist starting reference 124a at start-time or an assist starting reference 125a at running-time and switching from the former to the latter or vice versa. Generated by a start-time reference setting means 124, the assist starting reference 124a at start time is referred to hereafter as a start-time reference value. Likewise, generated by a run-time reference setting means 125, the assist starting reference 125a at run time is referred to hereafter as a running-time reference value. The start-time reference value 124a is set at a value greater than the running-time reference value 125a. For example, the start-time reference value 124a is set at a value ranging from about 10 to 20 kgf whereas the running-time reference value 125a is set at a value ranging from about 2 to 4 kgf.

The criterion setting means 122 includes memory such as a ROM unit for storing an operating-state criterion value 122a which is set in advance. The operating-state criterion value 122a is compared to the pedaling force in order to determine whether or not the bicycle is in a running state. The operating-state criterion value 122a is set at a small value of the pedaling force which is applied to a pedal when the pedal is almost not being worked. It should be noted that the operating-state criterion value 122a can be set at a value equal to that of the running-time reference value 125a. In this case, it is not necessary to provide a criterion setting means 122.

The operating-state judging means 121 has a configuration wherein a detected pedaling force T is compared to the operating-state criterion value 122a. If the detected pedaling force T is found smaller than the operating-state criterion value 122a, a time measuring request 121a is output to the state judging timer 123 in order to measure the length of a period in which the detected pedaling force T is smaller than the operating-state criterion value 122a. If a continuation time 123a output by the state judging timer 123 to the operating-state judging means 121 is found sustained for a judgment time set in advance typically at a value in the range 1 to 3 seconds, the operating-state judging means 121 determines that the bicycle is in a standstill state in which case a start-reference setting request 121b is output.

The start-reference setting means 124 and the run-reference setting means 125 employ memory such as ROM units for storing the start-time reference value 124a and the running-time reference value 125a respectively which are both set in advance.

The reference switching means 126 is designed to operate as follows. Receiving the start-reference setting request 121b, the reference switching means 126 supplies the start-time reference value 124a to the assist judging means 111. Receiving the assist request 111a, on the other hand, the reference switching means 126 supplies the running-time reference value 125a to the assist judging means 111. It should be noted that, in an initial state in which the power of the control apparatus 100 is turned on, the reference switching means 126 supplies the start-time reference value 124a to the assist judging means 111.

The assist judging means 111 compares a reference 126a output by the reference switching means 126 to the pedaling force T. If the pedaling force T is found greater than the reference value 126a, the assist judging means 111 issues an assist request signal. The assist-force computing means 112 is designed to set an assist force 112a based on the pedaling force T and the crank rotational speed V by referencing calculation formulas provided in advance or tables set in advance.

A field-effect transistor FET is driven to switch on and off by the PWM signal 113a output by the PWM-signal generating means 113, causing the driving motor 21 to be PWM-operated It should be noted that notation B denotes a battery power supply whereas notation SW denotes a power-supply switch means such as a main switch and a relay interlocked with a main switch with contacts thereof.

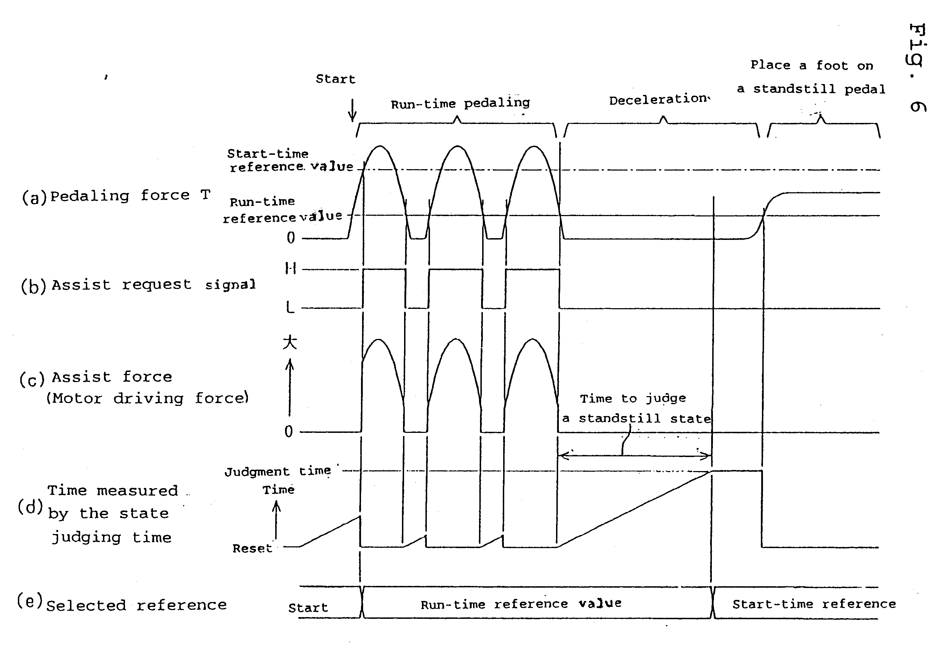

Fig. 6 shows time charts of the operation of the control apparatus.

In the initial state, the start-time reference value is selected as shown in Fig. 6 (e). The assist request 111a remains at an L (low) level as shown in Fig. 6 (b), causing no assist force (motor driving force) to be supplied by the driving motor 21 until the pedaling force shown in Fig. 6 (a) reaches the start-time reference value as shown in Fig. 6 (b). As the pedaling force exceeds the start-time reference value, the assist request signal 111a is raised to a H (high) level, causing the driving motor 21 to be driven under PWM control. Accordingly, an assist force is supplied in accordance with the detected pedaling force T as shown in Fig. 6 (c). By issuing the assist request signal 111a, the reference switching means 126 selects and outputs the running-time reference value 125a. Accordingly, after the bicycle starts running due to a large pedaling force applied to a pedal initially, an assist force (motor driving force) is supplied as long as the pedaling force T exceeds the running-time reference value 125a.

When the detected pedaling force T is smaller than the running-time reference value 125a, the duration of this state is measured by the state judging timer 123 as shown in Fig. 6 (d). When a state in which the pedals are not being worked due to deceleration or a state in which the detected pedaling force T is smaller than the running-time reference value 125a continues for a period of time called a judgment time which is typically 1 to 3 seconds long, the operating-state judging means 121 judges that the bicycle is in a standstill state and selects the start-time reference value 124a as shown in Fig. 6 (e). As a result, the assist request 111a is not issued and, thus, no assist force is generated even if a pedaling force greater than the running-time reference value 125a is applied by a foot placed on a pedal, in a standstill state, as long as the pedaling force is smaller than the start-time reference value 124a.

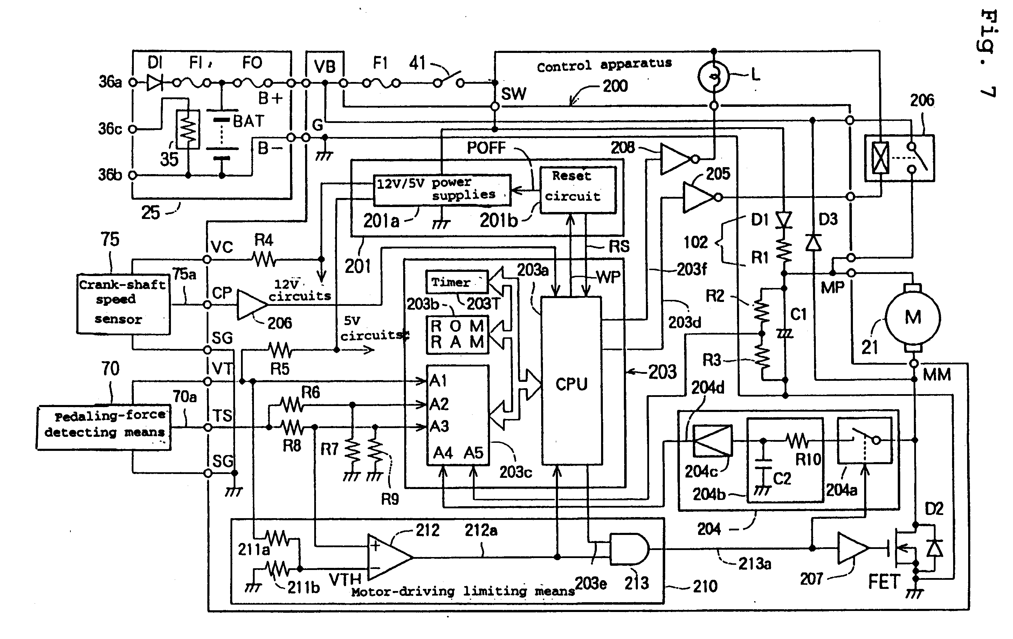

Fig. 7 is a circuit configuration diagram showing an actual example of the control system.

Electric power supplied by a battery power supply BAT in the battery case assembly 25 is applied from pins B+ and B- of the electric-power supplying connector 38 to power-supply pins B+ and B- of a control apparatus 200 through a fuse FO on the power-supplying side. It should be noted that electric power is charged from a pin 36a on the positive-pole side of the electric-power charging connector 36 through a diode DI and a fuse FI on the power-charging side. One end of the thermally sensitive resistor element 35 for monitoring the temperature of the battery during electric charging is connected to a pin 36b on the negative-pole side of the electric-power charging connector 36 while the other end thereof is connected to a signal pin 36c.

When the main switch (key switch) 41 is set to the ON position, electric power of the battery power supply BAT is supplied from a power-supply pin VB on the positive-pole side of the control apparatus 200 to a power-supply and reset circuit 201 through the fuse FO, the main switch 41 and a pin SW and, at the same time, a condenser C1 for regulating a motor power supply is charged through a charge circuit 102 comprising a diode D1 and a charging-current limiting resistor R1.

The power-supply and reset circuit 201 comprises 12V and 5V power supplies 201a for supplying power at regulated voltages of 12V and 5V respectively through voltage drops from the battery power supply BAT of typically 24V and a reset circuit 201b driven by the 5V power supply. The 12V power supply is used for supplying electric power to the crank-shaft speed sensor 75 and used as a voltage for controlling the gate of the power field-effect transistor (FET) which, in turn, controls the conduction of current flowing into the driving motor 21. The 5V power supply is, on the other hand, used for supplying electric power to, among other components, a single-chip microcomputer 203, the motor-driving limiting means 210 and a motor-current detecting circuit 204.

The reset circuit 201b transmits a reset pulse RS to a CPU 203a at the build-up time of the 5V power supply and also monitors watch-dog pulses WP output by the CPU 203a at predetermined intervals. If a watch-dog pulse WP is not detected by the reset circuit 201b for more than a predetermined period of time, the reset circuit 201b outputs a reset pulse RS, resetting (or initializing) the CPU 203a. In addition, if the supply of the watch-dog pulses WP is not resumed even after the reset pulse RS has been output, the reset circuit 201b transmits a 12V/5V-power-supply cut-off command POFF to the 12V and 5V power supplies 201a to terminate the supplying of the 5V and 12V power.

The functions of the main control system are implemented by the single-chip microcomputer 203 embedding, among other components, the CPU 203a, a ROM/RAM unit 203b, an A/D converter 203c and a timer 203T common to a plurality of systems. In this circuit, the CPU 203a and the timer 203T constitute the assist-reference varying means.

Resistors R2 and R3 connected in series between the terminals of the condenser C1 regulating the motor power supply are used as a potentiometer for dividing the voltage of the condenser C1 to provide a voltage in an allowable input voltage range of the A/D converter 203c. A divided voltage output by the potentiometer is supplied to an input pin A5 of the A/D converter 203c. Receiving a reset pulse RS, the CPU 203a carries out initialization. Thereafter, the CPU 203a outputs a relay driving command 203d at a point of time a value resulting from A/D conversion of the divided voltage exceeds a voltage set in advance. The relay driving command 203d is supplied to a relay driving circuit 205 which, in turn, provides a current to an exciting winding employed in a relay 206. As the exciting winding conducts, contacts of the relay 206 are put in a closed state, applying electric power generated by the battery power supply BAT to the driving motor 21.

The control system is designed so that a voltage appearing at the pins of the condenser C1 for regulating the motor power supply is monitored and the contacts of the relay 206 are put in a closed state only after the condenser C1 has been charged. As a result, no excessive charging current flows through the contacts of the relay 206, which excessive charging current would otherwise damage the contacts. It should be noted that the control system can also be designed so that the relay 206 is actuated when the charging of the condenser C1 is judged to have been completed at the time the rate per unit time of the increase in voltage appearing at the pins of the condenser C1 becomes smaller than a predetermined value. The judgment based on the rate of change in voltage allows completion of the charging to be detected without regard to the voltage of the battery power supply BAT.

When the field-effect transistor (FET) for controlling the flow of current to the driving motor 21 becomes bad due to a shorted connection between the drain and the source thereof or a diode D2 connected in parallel to the drain and the source for absorbing a reversed surge voltage developed between the drain and the source becomes bad because of a short-circuit junction therein, the potential between the pins of the condenser C1 becomes equal to a divided voltage output by a potentiometer across the battery voltage comprising the charging-current limiting resistor R1 and the resistance of the winding of the driving motor 21. By the way, the resistance of the charging-current limiting resistor R1 has a value sufficiently greater than that of the winding of the driving motor 21. Accordingly, in the event of a short-circuit failure described above, the voltage between the pins of the condenser C1 will not rise due to charging, inhibiting the actuation of the relay 206. As a result, an excessive current caused by such a short-circuit failure can be prevented in advance from being supplied.

In addition, the CPU 203a monitors the voltage between the pins of the condenser C1 even while the driving motor 21 is rotating, adjusting the conduction ratio (duty cycle) of the PWM signal 203e so as to provide a desired supplementary torque based on the actual voltage applied to the driving motor 21. As a result, the desired torque can be generated even if the voltage of the battery power supply BAT becomes low.

The control system is designed so that a surge voltage with a reversed polarity generated when stopping the current flowing to the driving motor 21 is absorbed by the battery power supply BAT through a diode D3. The fuse FO on the power-supplying side is a large-current fuse having a current withstanding capacity of several tens of amperes. Since electric power is supplied to the driving motor 21 through the contacts of the relay 206, the main switch 41 having a small current withstanding capacity and a fuse F1 with a small current withstanding capacity of several amperes connected in series with the main switch 41 can be employed.

12V power is supplied to the crank-shaft speed sensor 75 through a bleed resistor R4. A short-circuit failure may occur in the crank-shaft speed sensor 75 rather than at a terminal VC. In the event of such a short-circuit failure, a short-circuit current is limited by the bleed resistor R4, allowing the 12V power supply system to be protected. The signal 75a supplied to a terminal CP to represent the rotational speed of the crank shaft 15 undergoes a waveform shaping process at a waveform shaping circuit 206 for outputting a signal having a logic amplitude of the 5V system. The signal output by the waveform shaping circuit 206 is then supplied to an input pin of the CPU 203a.

5V power is supplied to the pedaling-force detecting means 70 through a bleed resistor R5. A short-circuit failure may occur in the pedaling-force detecting means 70 rather than at a terminal VT. In the event of such a short-circuit failure, a short-circuit current is limited by the bleed resistor R5, allowing the 5V power supply system to be protected. The pedaling-force detection signal 70a, a voltage signal supplied to a terminal TS, is divided by two potentiometers having voltage ratios different from each other. The divided voltages output by the potentiometers are supplied to the A/D converter 203c. One of the potentiometers comprises resistors R6 and R7 to provide a typical voltage ratio of 1/2 whereas the other potentiometer comprises resistors R8 and R9 to provide a typical voltage ratio of 1/4.

The CPU 203a takes in a detected torque represented by the pedaling-force detection signal 70a as two signals: the two divided voltages from the potentiometers which are each converted into digital data by the A/D converter 203c. In the case of a small detected torque, the digital data resulting from the A/D conversion of the divided voltage output by the potentiometer having the 1/2 voltage ratio to an A/D input pin A2 is selected. In the case of a large detected torque, on the other hand, the digital data resulting from the A/D conversion of the divided voltage output by the potentiometer having the 1/4 voltage ratio to an A/D input pin A3 is selected. In this way, the detected torque is converted into digital data by taking the voltage ratios into consideration. Such a configuration and processing allow a torque to be detected with a high degree of accuracy over a wide range of small to large torque values even without the necessity to raise the resolution of the A/D converter 203c.

Since the detection signal 70a output by the pedaling-force detecting means 70 is affected by the voltage of the power supply supplied thereto, the voltage of the power supply actually fed to the pedaling-force detecting means 70 is also input to the A/D converter 203c through an A/D input terminal A1 to be converted into digital data as well. The digital data resulting from the A/D conversion is then used for compensating the detection signal 70a for the effect of the voltage of the power supply on the detection signal 70a. In this way, the pedaling force can be detected with an even higher degree of accuracy.

The voltage comparator 212 employed by the motor-driving limiting means 210 compares the threshold voltage VTH, a divided voltage generated by a potentiometer comprising resistors 211a and 211b for dividing the voltage of the power supply applied to the pedaling-force detecting means 70, to a divided voltage generated by a potentiometer comprising resistors R8 and R9 for dividing the pedaling-force detection signal 70a. Since the threshold voltage VTH obtained by dividing the voltage of the power supply applied to the pedaling-force detecting means 70 is constant, it is possible to determine whether or not the pedaling force (torque) exceeds a predetermined value with a high degree of accuracy.

A signal 212a output by the voltage comparator 212 is supplied to the CPU 203a through an input terminal thereof. The CPU 203a monitors the periodical generation of L (low) level of the signal 212a output by the voltage comparator 212 which indicates that the-pedaling force is in a zero state. If the zero state of the pedaling force is not detected periodically while the operation of the driving motor 21 is being controlled by pedaling-force detection based on A/D converted data, the operation to output the PWM signal 203e is ended to terminate the operation of the driving motor 21. In this way, an unnecessary torque can by all means be prevented from being generated whenever the operation of the pedaling-force detection system such as the pedaling-force detecting means 70 or the A/D converter 203c becomes abnormal, requiring such a torque.

Based on information on the pedaling force received through the A/D converter 203c and the signal 75a representing the rotational speed of the crank shaft 15, the CPU 203a searches a PWM duty map for a duty cycle of the PWM signal 203e to be generated and output thereby.

The PWM signal 203e is passed on to a FET driving circuit 207 by the logical-product circuit 213 as long as the signal 212a output by the comparator 212 is sustained at a H (high) level or, in other words, as long as the detected pedaling force is greater than a predetermined value. The FET driving circuit 207 provides electric power to the gate of the field-effect transistor (FET) in accordance with a signal 213a output by the logical-product circuit 213, switching the field-effect transistor (FET) on and off. As a result, the driving motor 21 is run under PWM control.

The CPU 203a also monitors the motor current to determine whether or not the driving motor 21 is running normally. If an abnormal motor current is detected, the operation of the driving motor 21 is limited.

When the driving motor 21 is in a conducting state, a voltage referred to hereafter as a FET-on voltage, appears between the drain and the source of the field-effect transistor FET. The magnitude of the FET-on voltage is equal to the product of the current flowing to the driving motor 21 and an on-resistance of the field-effect transistor FET.

An electronic switch 204a employed by a motor-current detecting circuit 204 is turned on synchronously with the H (high) level of the signal 213a output by the logical-product circuit 213, supplying the FET-on voltage to a time-constant circuit 204b comprising a resistor R10 and a condenser C2. The electronic switch 204a can be designed using a bipolar transistor or a field-effect transistor. The voltage of the capacitor C2 resulting from the supplying of the FET-on voltage to the time-constant circuit 204b in synchronization with the PWM signal is a nearly-direct-current voltage (ripple voltage) having a time constant determined by the time-constant circuit 204b. The nearly-direct-current voltage (ripple voltage) is direct-current amplified by a voltage amplifier 204c into a voltage signal 204d which is supplied to the A/D converter 203b through an A/D conversion input terminal A5. The ripple voltage is converted into digital data representing the motor current, which data is used by the CPU 203a to determine whether or not the motor current is excessive. If the motor current is found excessive, the conduction duty cycle is set to a low value or the operation of the driving motor 21 is terminated.

Furthermore, at the time digital voltage data from the A/D converter 203c representing the motor current exceeds a value representing a motor current of zero or a motor current close to zero set in advance, the CPU 203a requests a timer 203T to start time measurement. If the motor current does not go below the value representing a motor current of about zero within an allowable time set in advance, the operation to output a motor driving command 203d is discontinued in order to terminate the operation to supply electric power to the driving motor 21.

In the present circuit example described above, a motor-power-supply ending means comprises the CPU 203a, the A/D converter 203c and the timer 203T embedded in the single-chip microcomputer 203.

It should be noted that the motor current can also be monitored by connecting a resistor for current monitoring in series with the field-effect transistor (FET) and measuring a voltage drop between the ends of the current monitoring resistor. In this circuit example, none the less, the FET-on voltage is detected, eliminating a loss that would otherwise be incurred in the current monitoring resistor. As a result, the battery power supply BAT can be used with a high degree of efficiency.

In addition, the CPU 203a also compares data representing the voltage of the battery power supply BAT input through the A/D converter 203c to a residuum criterion voltage set in advance. If the voltage of the battery power supply BAT is found lower than the residuum criterion voltage, a display signal 203f is output to a lamp driving circuit 207 to turn the lamp L on, urging charging of the battery. It should be noted that the lamp L can also be turned on and off instead of being turned on continuously in order to save electric power. In this case, the lamp L is turned on and off intermittently at a period of typically several seconds.

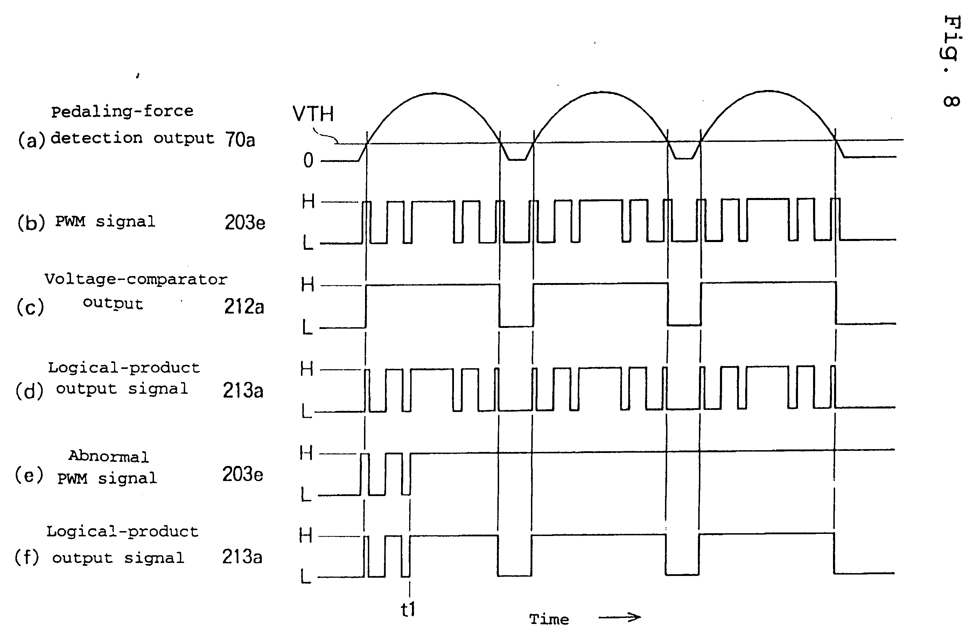

Fig. 8 shows time charts showing the operation of the motor-driving limiting means.

When the pedals of a bicycle are being worked, at upper and lower dead centers, the pedaling forces are not applied. Therefore, the detection signal 70a output by the pedaling-force detecting means 70 is a voltage waveform appearing as periodically repeated hills and valleys as shown in Fig. 8 (a). The voltage comparator 212 sets the signal 212a at a H (high) level during periods in which the pedaling-force detection signal 70a is greater than the threshold voltage VTH as shown in Fig. 8 (c). Accordingly, when the CPU 203a generates and outputs a PWM signal 203e based on the pedaling-force detection signal 70a as shown in Fig. 8 (b), the logical-product circuit (AND gate) 213 passes on the PWM signal 203e as a logical-product output signal 213a shown in Fig. 8 (d) which logical-product output signal 213a is used for controlling the operation of the driving motor 21. That is to say, only during a period in which the pedaling-force detection signal 70a is greater than the threshold voltage VTH is the operation of the driving motor 21 allowed for supplying supplementary electric power.

Assume that the single-chip microcomputer 203 does not function normally any more after, for example, a point of time t1 for some reasons as shown in Fig. 8 (e). Even if the PWM signal 203e is kept at a H (high) level after the point of time t1 due to the abnormal operation of the single-chip microcomputer 203, the operation of the driving motor 21 is enabled only during periods in which the pedaling-force detection signal 70a is greater than the threshold voltage VTH as shown in Fig. 8 (f). As a result, supplementary electric power is by no means supplied by the driving motor 21 when the pedals are not being worked even if the operation of the single-chip microcomputer 203 becomes abnormal, requiring such supplementary electric power.

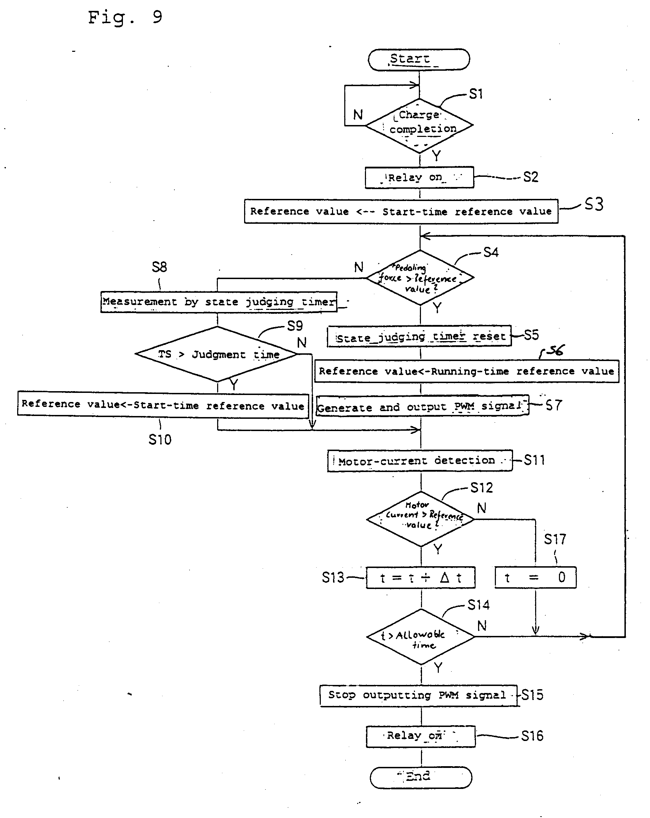

A flowchart of the overall operation of the control apparatus is shown in Fig. 9.

At a step S1, the CPU 203a determines whether or not the charging of the condenser C1 for regulating the motor power supply has been completed. If the charging has been completed, the flow proceeds to a step S2 to output a relay driving command 203d after the completion of the charging. The flow then continues to a step S3 to set the start-time reference value as an initial assist starting reference.

At a step S4, the CPU 203a determines whether or not the pedaling force T exceeds the assist starting reference. If the pedaling force T exceeds the assist starting reference, the flow proceeds to a step S5 to reset a state timer, then to a step S6 to change the assist starting reference to a running-time reference value and finally to a step S7 to generate and output a PWM signal in accordance with the pedaling force and a crank-shaft rotational speed. The PWM signal causes the driving motor 21 to start the PWM operation, supplying supplementary power.

If the pedaling force T is found smaller than the assist starting reference at the step S4, on the other hand; the flow continues to a step S8 to request a state judging timer for recognizing a standstill state to measure the continuation time of a state in which the pedaling force T is found smaller than the assist starting reference. The flow then proceeds to a step S9 to compare the continuation time to a judgment time. If the continuation time is found equal to or greater than the judgment time, the flow proceeds to a step S10 to change the assist starting reference to a start-time reference value. In this way, the assist starting reference is changed to a value for a state in which the pedals have not been worked for a while or a brake is applied to bring the bicycle to a standstill. As a result, no supplementary power will be generated as far as the pedaling force is smaller than the start-time reference value even if a foot is placed on a pedal.

In this embodiment, the functions of the assist-reference varying means are implemented by the processings carried out at the steps S3 to S10.

At a step S11, the CPU 203a detects the motor current. The flow then proceeds to a step S12 to determine whether or not the motor current exceeds a reference. If the motor current is found greater than the reference, the flow proceeds to a step S13 to measure the lapse of time by means of the timer 203T. The flow then continues to a step S14 to compare a period of time, in which the motor current exceeds the reference, to an allowable time. If the period of time is found equal to or greater than the allowable time, the flow proceeds to a step S15 to terminate an operation to output the PWM signal and then to a step S16 to end operations to output the relay driving command 203d and to supply electric power to the driving motor 21. If the motor current is found smaller than the reference at the step S12, the flow proceeds to a step S17 to reset the measurement time of the timer 203T before returning to the step S4 to repeat the processings carried out at the step and the subsequent steps. As described above, functional operations of the motor power-supply terminating means are implemented by the processings carried out at the steps S7 to S13.

As described above, the electrically assisted bicycle is equipped with an assist-reference varying means for monitoring the continuation time of a state in which the pedaling force is smaller than a operating criterion value and, if the continuation time attains a judgment time set in advance, the pedaling fore reference value is changed to the start-time reference value which is greater than the run-time reference value so that, in a standstill state, the pedaling fore reference value is set at a large value. Accordingly, with one foot placed on a pedal and the other one placed on the ground, the motor will never be operated and unnecessary supplementary electrical power is supplied even if a very large pedaling force is applied to the pedal. It should be noted that after a pedaling force exceeding the start-time reference value has been applied, the pedaling fore reference value is restored to the running-time reference value. If the pedaling force exceeds the pedaling force reference value, the motor is driven to provide supplementary electric power. In addition, a detected pedaling force can be used to determine that the bicycle is in a standstill state. It is thus unnecessary to provide a speed sensor or the like.

Summarized, to increase a reference for determining whether or not an assist operation (an operation to drive a motor and supply supplementary electric power) is to be carried out to a value greater than a reference for a running state when a standstill state of the electrically assisted bicycle is recognized from a detected pedaling force without using a speed sensor or the like and when the electrically assisted bicycle is found to be in a standstill state, so that an unnecessary assist operation is not carried out even if a foot is placed on a pedal thereof, applying a large pedaling force.

An operating-state judging means 121 employed in an assist-reference varying means 120 has a configuration wherein a detected pedaling force T is compared to the operating-state criterion 122a. If the detected pedaling force T is found smaller than the operating-state criterion 122a a time measuring request 121a is output to the state judging timer 123 in order to measure the length of a period in which the detected pedaling force T is smaller than the operating-state criterion 122a. If a continuation time 123a output by the state judging timer 123 to the operating-state judging means 121 is found sustained for a judgment time set in advance, the operating-state judging means 121 determines that the bicycle is in a standstill state in which case a start-reference setting request 121b is output to request a reference switching means 126 to change a pedaling-force reference value to start an assist operation to a start-time reference value which is greater than a running-time reference value. When the electrically assisted bicycle enters a state in which a pedaling force exceeding the large start-time reference value is applied, the pedaling-force reference value is restored to the small running-time reference value.

## Claims

1. An electrically assisted bicycle, wherein the driving force for the bicycle (1) is provided by a pedaling force (T) provided by human power and an assist force provided by an electric motor (21), comprising:
- pedaling force detecting means (70) for detecting the pedaling force (T),
- assist judging means (111) for outputting an assist request signal (111a) when assist force is to be output by the electric motor (21),
- deference switching means (126) for setting a pedaling force reference value (126a),
characterized in that
- the assist judging means (111) outputs the assist request signal (111a) as long as the pedaling force (T) exceeds the pedaling force reference value (126a),
- the reference switching means (126) sets the pedaling force reference value (126a) to a predetermined start-time reference value (124a) when the pedaling force (T) has been remaining below a predetermined operating-state criterion value (122a) for the duration of a predetermined judgement time,
- the reference switching means (126) sets the pedaling force reference value (126a) to a predetermined running-time reference value (125a) which is smaller than the start-time reference value (124a) when the the assist request signal (111a) is output.

## Patentansprüche

1. Elektrisch unterstütztes Fahrrad, worin die Antriebskraft für das Fahrrad (1) durch eine durch menschliche Leistung bereitgestellte Tretkraft (T) und eine durch einen Elektromotor (21) bereitgestellte Unterstützungskraft bereitgestellt wird, umfassend:
- eine Tretkrafterfassungseinrichtung (70) zum Erfassen der Tretkraft (T),
- eine Unterstützungsbeurteilungseinrichtung (111) zur Ausgabe eines Unterstützungsanforderungssignals (111a), wenn durch den Elektromotor (21) Unterstützungskraft auszugeben ist,
- eine Bezugswertumschalteinrichtung (126) zum Einstellen eines Tretkraftbezugswerts (126a),
**dadurch gekennzeichnet**, daß
- die Unterstützungsbeurteilungseinrichtung (111) das Unterstützungsanforderungssignal (111a) solange ausgibt wie die Tretkraft (T) den Tretkraftbezugswert (126a) übersteigt,
- die Bezugswertumschalteinrichtung (126) den Tretkraftbezugswert (126a) auf einen vorbestimmten Startzeit-Bezugswert (124a) einstellt, wenn die Tretkraft (T) während der Dauer einer vorbestimmten Beurteilungszeit unter einem vorbestimmten Betriebszustandskriteriumswert (122a) bleibt,
- die Bezugswertumschalteinrichtung (126) den Tretkraftbezugswert (126a) auf einen vorbestimmten Fahrtzeit-Bezugswert (125a), welcher kleiner ist als der Startzeit-Bezugswert (124a), einstellt, wenn das Unterstützungsanforderungssignal (111a) ausgegeben wird.

## Revendications

1. Bicyclette à assistance électrique, dans laquelle la force d'entraînement de la bicyclette (1) est fournie par une force de pédalage (T) engendrée par la puissance humaine, et par une force d'assistance fournie par un moteur électrique (21), comprenant :
- des moyens détecteurs de force de pédalage (70) pour détecter la force de pédalage (T),
- des moyens appréciateurs d'assistance (111) pour délivrer un signal de demande d'assistance (111a) lorsqu'une force d'assistance doit être développée par le moteur électrique (21),
- des moyens commutateurs de référence (126) pour fixer une valeur de référence (126a) de la force de pédalage,
caractérisée en ce que
- les moyens appréciateurs d'assistance (111) délivrent le signal de demande d'assistance (111a) aussi longtemps que la force de pédalage (T) dépasse la valeur de référence (126a) de la force de pédalage,
- les moyens commutateurs de référence (126) fixent la valeur de référence (126a) de la force de pédalage à une valeur de référence de temps de démarrage prédéterminée (124a) lorsque la force de pédalage (T) est demeurée en-deçà d'une valeur critère d'état de fonctionnement prédéterminée (122a) pendant la durée d'un temps d'appréciation prédéterminé, les moyens commutateurs de référence (126) fixent la valeur de référence (126a) de la force de pédalage à une valeur de référence de temps de marche prédéterminée (125a) qui est inférieure à la valeur de référence de temps de démarrage (124a) lorsque le signal de demande d'assistance (111a) est délivre.
